# EUROPEAN PATENT SPECIFICATION

(11) **EP 1 857 980 B1**
(45) Date of publication and mention of the grant of the patent: **11.05.2016**
(21) Application number: 07251896.2
(22) Date of filing: 08.05.2007
(51) Int. Cl.: G06T 19/20

(54) **Method, data generator and program to generate parts catalog data and parts catalog display**
Verfahren, Datengenerator und Programm zur Generierung von Teilekatalogdaten und Anzeige eines Teilekatalogs
Procédé, générateur de données et programme pour générer des données de catalogue de pièces et affichage du catalogue de pièces

(30) Priority: 15.05.2006 JP 2006135220
(43) Date of publication of application: 21.11.2007
(73) Proprietor: Ricoh Company, Ltd., Tokyo 143-8555 (JP)
(72) Inventor: Kagawa, Masaaki, Ohta-ku, Tokyo 143-8555 (JP); Satoh, Naoyuki, Ohta-ku, Tokyo 143-8555 (JP)
(74) Representative: Leeming, John Gerard

(56) References cited:
- FR-A1- 2 712 999
- US-A1- 2002 107 673
- M. AGRAWALA ET AL.,: "Designing Effective Step-by-StepAssembly Instructions" PROCEEDINGS OF THE 30TH INTERNATIONAL CONFERENCE ON COMPUTER GRAPHICS AND INTERACTIVE TECHNIQUES (SSIGGRAPH2003), [Online] vol. 22, no. 3, 2003, pages 828-837, XP002560899 Retrieved from the Internet: URL:portal.acm.org> [retrieved on 2009-12-14]
- WILMOT LI ET AL: "Interactive image-based exploded view diagrams" PROCEEDINGS. GRAPHICS INTERFACE, XX, XX, 17 May 2004 (2004-05-17), pages 203-212, XP002338399

## Description

The present invention generally relates to a method, a data generator, and a program to generate parts catalog data and a parts catalog display, for example, to a method, a data generator, and a program to generate parts catalog data for a visually three-dimensional parts catalog of a product and a display to display the parts catalog.

In general, parts catalogs, parts lists, and operation manuals of products include illustrations, such as exploded diagrams and perspective diagrams. It is a common practice to use three dimensional (3D) data generated by a CAD system to easily create such illustrations.

Generally, a product includes a plurality of component parts. A customer may use a parts catalog and/or a parts list to order spares of the component parts. The parts catalog and the parts list include part names, part numbers, and illustrations to show the shape and the location of the component part. In the parts catalogs, respective parts are generally shown in assemblies (unit) constituting the product.

However, 3D data of some parts may not be generated when designing a product with a 3D CAD system. For example, a designer may omit to generate data of electric cables, harnesses, screws, nuts, etc., to make the designing work easier. Therefore, it is necessary to supplement image data of those parts when creating a parts catalog using 3D CAD data.

The article "Designing Effective Step-By-Step Assembly Instructions" by Maneesh Agrawala et al, Proceedings of the 30th International Conference on Computer Graphics and Interactive Techniques, discloses design principles for creating effective assembly instructions for products such as self-assembly furniture appliances and toys. Algorithmic techniques used to produce assembly instructions given object geometry, orientation and optional grouping and ordering constraints are disclosed.

According to the present invention, there is provided a method, a data generator, and a program to generate parts catalog data for a visual parts catalog and a display to display the parts catalog as defined in the appended claims. In one embodiment, a method of generating parts catalog data for a visually three-dimensional parts catalog of a product includes inputting data of a part of the product either as three-dimensional data or as a data combination of two-dimensional data and position information of the part in a three-dimensional model of the product.

In another embodiment, a data generator to generate parts catalog data for a visually three-dimensional parts catalog of a product includes a data input device configured to input data of a part of the product either as three-dimensional data or as a data combination of two-dimensional data and position information of the part in a three-dimensional model of the product.

In another embodiment, a program for a data generator to generate parts catalog data for a visually three-dimensional parts catalog of a product includes inputting data of a part of the product either as three-dimensional data of the part or as a data combination of two-dimensional data and position information of the part in a three-dimensional model of the product.

In another embodiment, a display configured to display data of a parts catalog is configured to display an image of a part corresponding to three-dimensional data when data of the part is the three-dimensional data and to display two-dimensional data at a position corresponding to the position information when data of the part is the data combination.

A more complete appreciation of the disclosure and many of the attendant advantages thereof will be readily obtained as the same becomes better understood by reference to the following detailed description when considered in connection with the accompanying drawings, wherein:
FIG. 1 is a block diagram illustrating a configuration of a data processor according to an embodiment;
FIG. 2 is a block diagram illustrating a function block to generate a parts catalog;
FIG. 3 is a schematic diagram illustrating an example of parts catalog data;
FIG. 4A illustrates an example assembly diagram;
FIG. 4B illustrates an example single part diagram;
FIG. 5A and 5B are example assembly diagrams;
FIG. 6A and 6B are example assembly diagrams;
FIG. 7 is an illustration to explain a region of position information;
FIG. 8 illustrates an example operation screen;
FIG. 9 illustrates an example operation screen when "main body" is selected;
FIG. 10 illustrates an example operation screen when "OPTION 1" is selected;
FIG. 11 is an illustration to explain a process to select a supplement image;
FIG. 12 is an example indication of the supplement image;
FIG. 13 is an illustration to explain a position of the supplement image;
FIGs. 14A to 14F are illustrations to explain a procedure to input position information; and
FIG. 15 is a flowchart of an example procedure by a catalog generator.

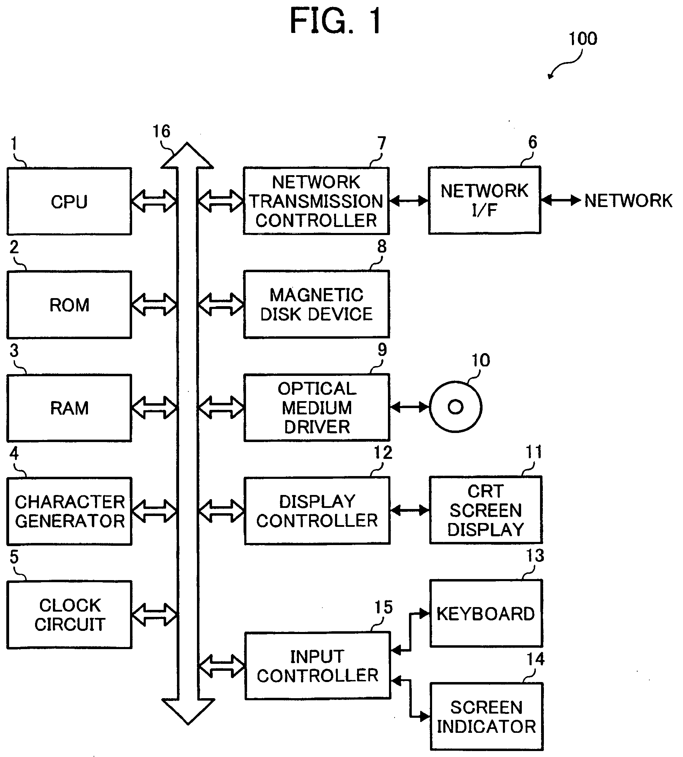

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that operate in a similar manner. Referring now to the drawings, wherein like reference numerals designate identical or corresponding parts throughout the several views, particularly to FIG. 1, data processor 100 according to an embodiment is described.

FIG. 1 illustrates a configuration of the data processor 100. The data processor 100 may includes a CPU (central processing unit) 1, a ROM (read only memory) 2, a RAM (random access memory) 3, a character generator 4, a clock circuit 5, a network transmission controller 7, a magnetic disk device 8, an optical medium driver 9, a display controller 12, an input controller 15, and an internal bus 16.

The CPU 1, the ROM 2, the RAM 3, the character generator 4, the clock circuit 5, the network transmission controller 7, the magnetic disk device 8, the optical medium driver 9, the display controller 12, and the input controller 15 exchange data with each other via the internal bus 16. The data processor 100 may further include a network interface (I/F) circuit 6, a CRT (cathode-ray tube) screen display 11, a keyboard 13, and a screen indicator 14.

The CPU 1 controls an operation of the data processor 100. The ROM 2 stores data and a program that the CPU 1 executes on start-up. The RAM 3 constitutes a work area for the CPU 1.

The character generator 4 may generate data to indicate a graphic character. The clock circuit 5 may output a current date and time. The network I/F circuit 6 may connect the data processor 100 to a network such as a local area network (not shown). The network transmission controller 7 may control communication of respective predetermined protocol suites to exchange data with another data processor via a network.

The magnetic disk device 8 may store various data files, for example, an application program, work data, and file data. The optical medium driver 9 may access an exchangeable optical recording medium 10 (e.g., CD-ROM, DVD).

The CRT screen display 11 may provide an operation screen for the data processor 100. The display controller 12 may control the display contents of the CRT screen display 11. The keyboard 13 includes various keys to be used by a user to operate the data processor 100. The screen indicator 14 may be used to indicate an arbitrary point on the CRT screen display 11. The input controller 15 may load information input from the keyboard 13 and/or the display indicator 14.

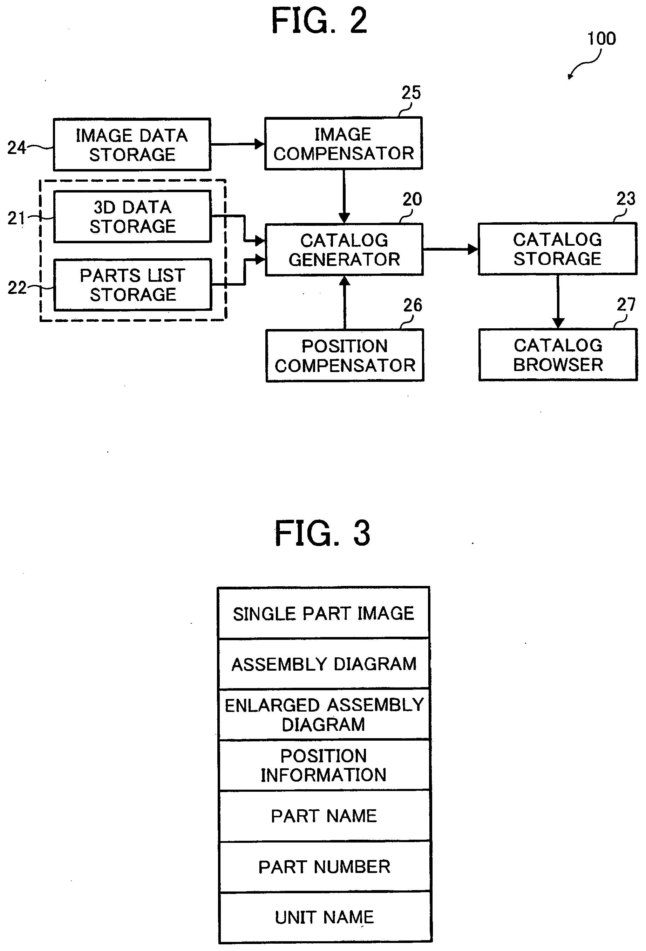

The data processor 100 includes a function to create a parts catalog using 3D data generated with a 3D CAD system (3D data). FIG. 2 is an example diagram illustrating a function block to create the parts catalog.

As shown in FIG. 2, the data processor 100 includes a catalog generator 20, a 3D data storage 21, a parts list storage 22, a catalog storage 23, an image data storage 24, an image compensator 25, a position information compensator 26, and a catalog browser 27. The 3D data storage 21 and the parts list storage 22 may be provided in the magnetic disk device 8.

The catalog generator 20 may generate parts catalog data, based on the data stored in the 3D data storage 21 and the parts list storage 22, and may store the parts catalog data in the catalog storage 23.

The 3D data storage 21 is a database storing 3D data to be used to create a parts catalog and may store shape information of respective component parts constituting a product. The 3D data storage 21 may further store information of a state in which respect parts are assembled as the product.

The parts list storage 22 is a database storing a list of parts (exchangeable parts) to be included in the parts catalog. In the parts list, a name of a part, a part identification number to order the part (part order number), etc., may be listed for each unit.

If the 3D data of a part listed in the parts list is not available, its image taken by a digital still camera or generated from an illustration is stored in the image data storage 24 as the two-dimensional image data (2D data). The image compensator 25 may specify the image data (image file) in the image data storage 24 and send the image data to the catalog generator 20.

The user may specify a location to attach the part in a product with the screen indicator 14 and/or the keyboard 13, when 3D data of the part is not available. The position information compensator 26 may send information specifying the location of the part in the product as the position information to the catalog generator 20.

For the part whose 3D data is stored in the 3D data storage 21, the catalog generator 20 refers thereto to obtain the 3D data. For the part whose 3D data is not stored in the 3D storage 21, the catalog generator 20 may obtain the 2D data compensated by the image compensator 25 and may use the position information compensated by the position information compensator 26 as position of the part in the product.

The catalog storage 23 stores a list of parts included in the parts catalog, the image of a single part, assembly diagrams from different viewpoints, and the position information indicating the location of the part in the product. The list of parts includes the names and part order number. The assembly diagram is an image to show the location of the part in the product. The catalog storage 23 may store a plurality of assembly diagrams from different viewpoints and the position information corresponding to the plurality of viewpoints for each part.

The catalog browser 27 browses the parts catalog data stored in the catalog storage 23. The user may search a part by its name and by specifying a region on its assembly diagram.

FIG. 3 is an example of the parts catalog data generated for each part. The parts catalog data may include the single part images, the assembly diagrams, the enlarged assembly diagrams, the position information, the part names, the part order numbers, and the unit names.

The single part image is an image of the target part generated on the scale to show the entire target part as large as possible. The scale of the single part image may differ depending on the part.

The assembly diagram is an image of the product or unit to which the target part belongs and is generated for each part. In the assembly diagrams, the target part is highlighted to show the location of the part and other parts in the unit or product may be illustrated as semi-transparent models or wire models.

In case of the assembly diagram based on the 3D image, an area enclosed by the outline of the target part may be highlighted. Alternatively, a rectangular region showing the location of the target part or a rectangular solid enclosing the target part is highlighted in the assembly diagrams.

A plurality of assembly diagrams with different viewpoints may be generated for each part as required. The scale may be substantially the same through the diagrams with similar viewpoints. The assembly diagrams may be generated on the scale to show the entire product or unit as large as possible.

The enlarged assembly diagram is an enlarged display of an assembly diagram. The scale of enlargement may be changeable from the scale to show all the parts in the product or unit as large as possible to the scale to show the whole of the target part as large as possible. The entire target part is shown in the enlarged assembly diagrams regardless of scale.

The position information designates the position and the region of the target part on the screen, to designate the position of the target part in an assembly diagram or an enlarged assembly diagram. The position information is coordinates of a rectangle enclosing the entire target part. The position information is a combination of the coordinates of its upper left apex and lower right apex, when the coordinates of the upper left edge of the screen is the origin of coordinates (X=0, Y=0) and x-coordinates positively increase to the right and y-coordinates positively increase to the bottom.

The part name is a name of the target part. The part number (part order number) is an identification number for each part. The same part number is applied to the parts having substantially the same configuration. The unit name is a name of unit as an assembly of parts to which the target part belongs. Each part belongs to a unit (e.g., sheet feeder, sheet ejector, etc.)

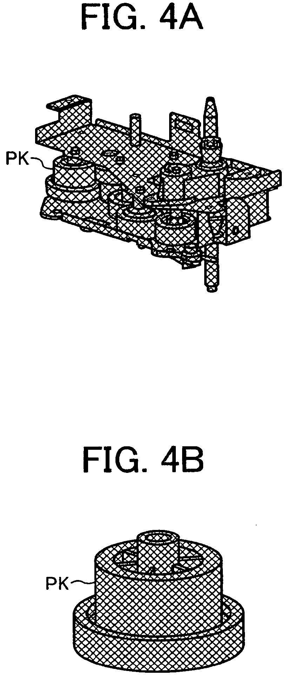

FIG. 4A is an example display image of a unit including a part PK whose 3D data is stored in the 3D data storage 21. FIG. 4B is an example single part image of the part PK.

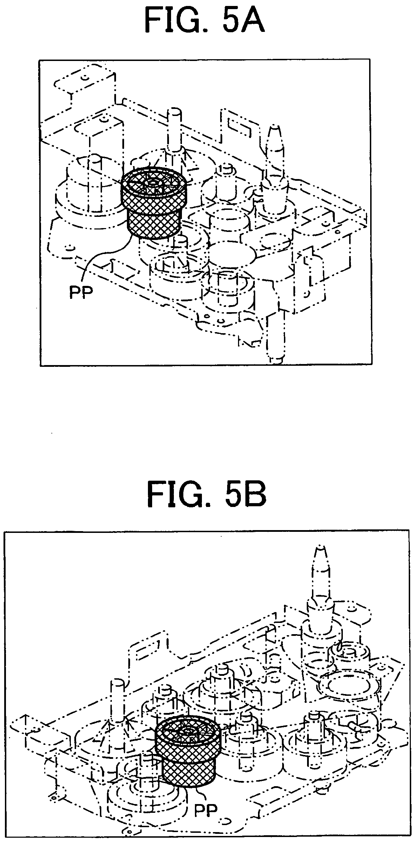

FIG. 5A is an example assembly diagram of a part PP whose 3D data is stored in the 3D data storage 21. The catalog browser 27 may highlight the part PK and show other parts in unit as semi-transparent models. The catalog browser 27 may shade the part PK and/or color a wire frame for the part PK differently (e.g., red) to clearly indicate its location.

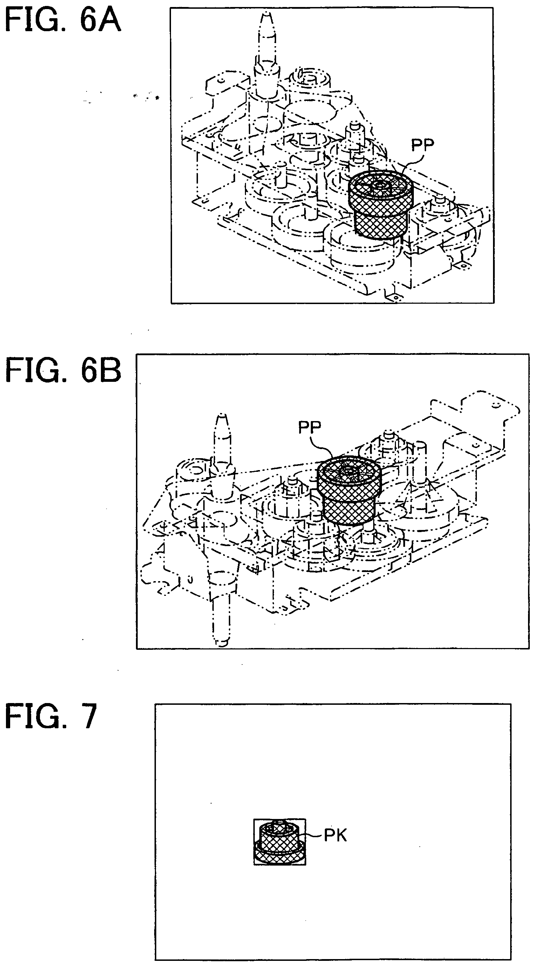

FIGs. 5B, 6A, and 6B are example assembly diagrams of the part PP from different viewpoints. In an embodiment, four versions of assembly diagram are generated as above. The user may quickly view the parts catalog with the catalog browser 27 because a plurality of assembly diagrams with different viewpoints are preliminary generated.

As illustrated in FIG. 7, the position information is generated as a rectangle enclosing the single part image.

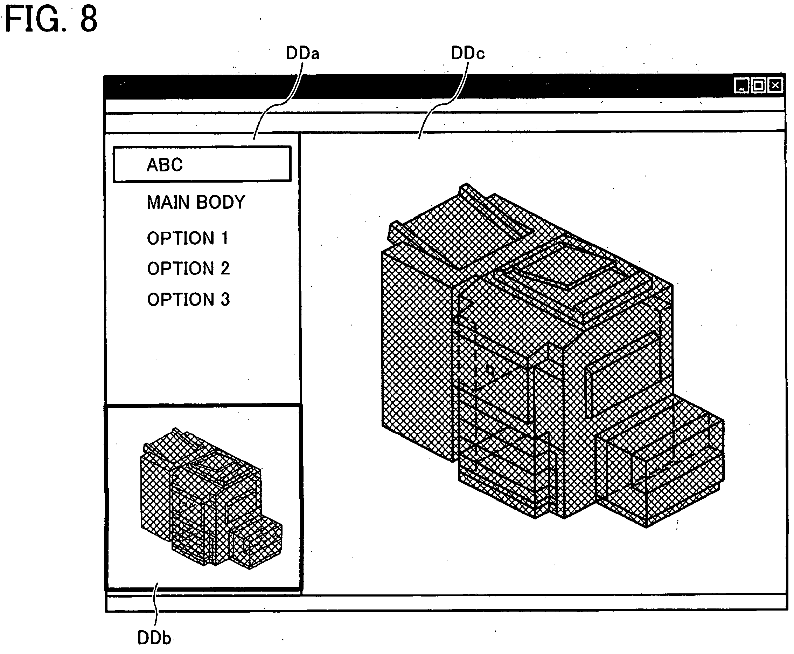

Next, processes to supplement an image of a part whose 3D image is not stored in the 3D data storage 21 to the parts catalog are described. FIG. 8 illustrates an example operation screen by the CRT screen display 11 for the data processor 100. The operation screen includes a parts list field DDa, a single part image field DDb, and a catalog display field DDc. A list of parts appears in the parts list field DDa. The parts list includes the name of product or unit (ABC) on top and names of its components (MAIN BODY, OPTION 1, OPTION 2, and OPTION 3) under the name of product or unit. A currently selected part is enclosed with a frame in the list.

The single part image of the selected part appears in the single part image field DDb. As illustrated in FIG. 8, an image of entire product (ABC) may be initially displayed. When the 3D data storage 21 stores 3D data of the selected part, the data processor 100 may display 2D image rendered from a stereoscopic image based on the 3D data, in the single part image field DDb. The catalog display field DDc displays the entire product or unit.

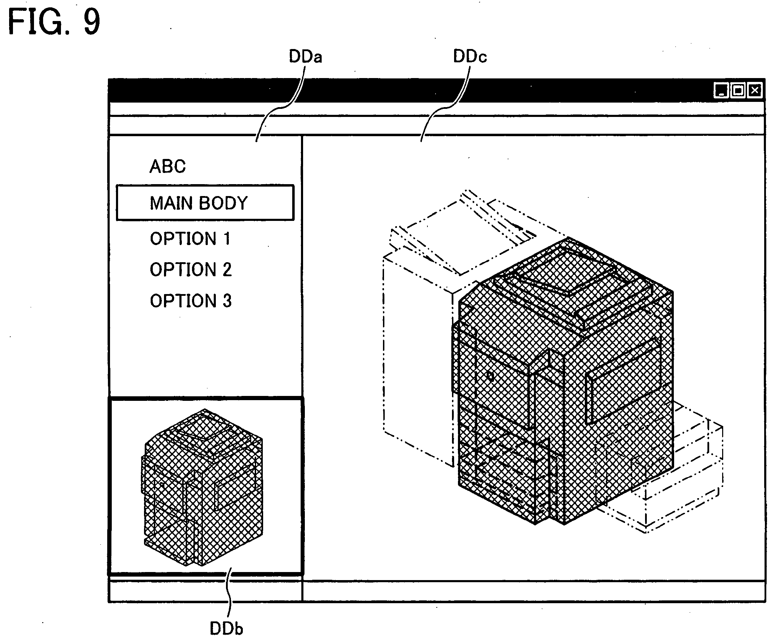

When the user selects "MAIN BODY" in the parts list field DDa in FIG. 8, the CRT screen display 11 renews its screen as illustrated in FIG. 9. Because the 3D data storage 21 stores the 3D data of the main body, an image corresponding to the 3D CAD data appears in the single part image field DDb. The main body is highlighted in the catalog display field DDc.

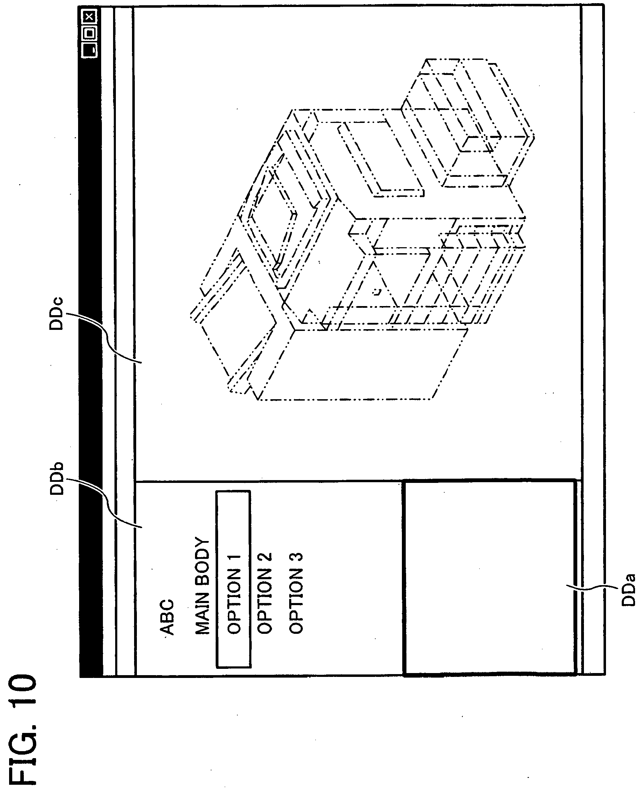

When the user selects "OPTION 1" whose 3D data is not stored in the 3D data storage 21 in the parts list field DDa, the CRT screen display 11 displays the screen illustrated in FIG. 10 in which no image appears in the single part image field DDb and no part is highlighted in the catalog display field DDc.

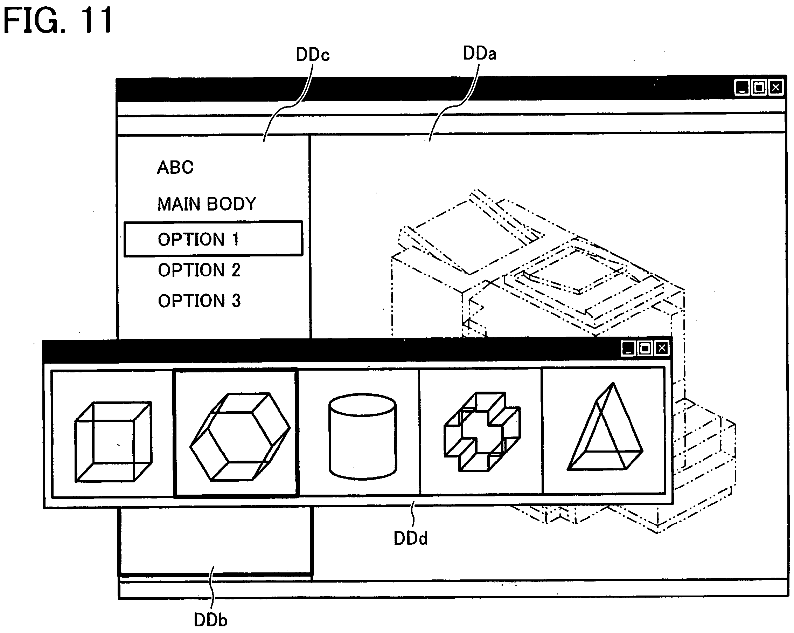

The user may choose to supplement an image of OPTION 1. For example, the CRT screen display 11 may display an image choice field DDd illustrated in FIG. 11. When the user chooses one of the images stored in the image data storage 24, its display frame is highlighted.

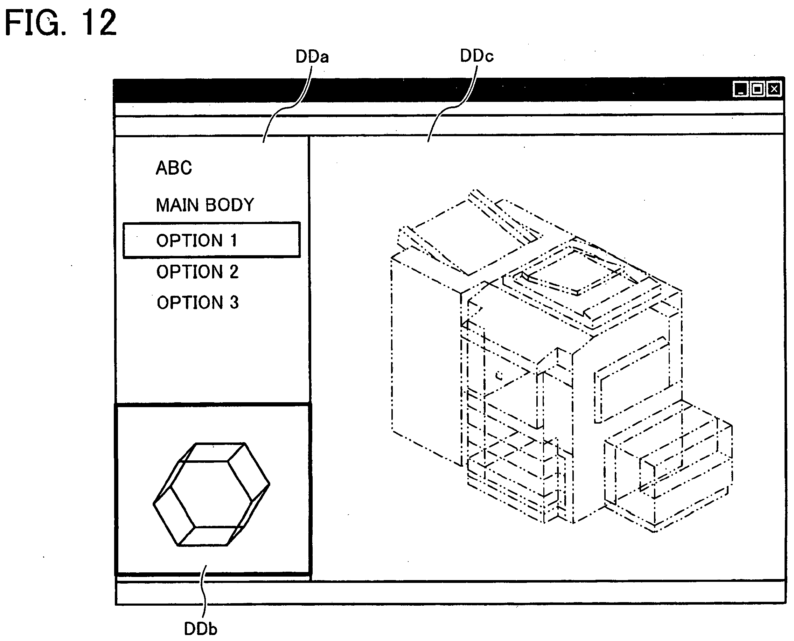

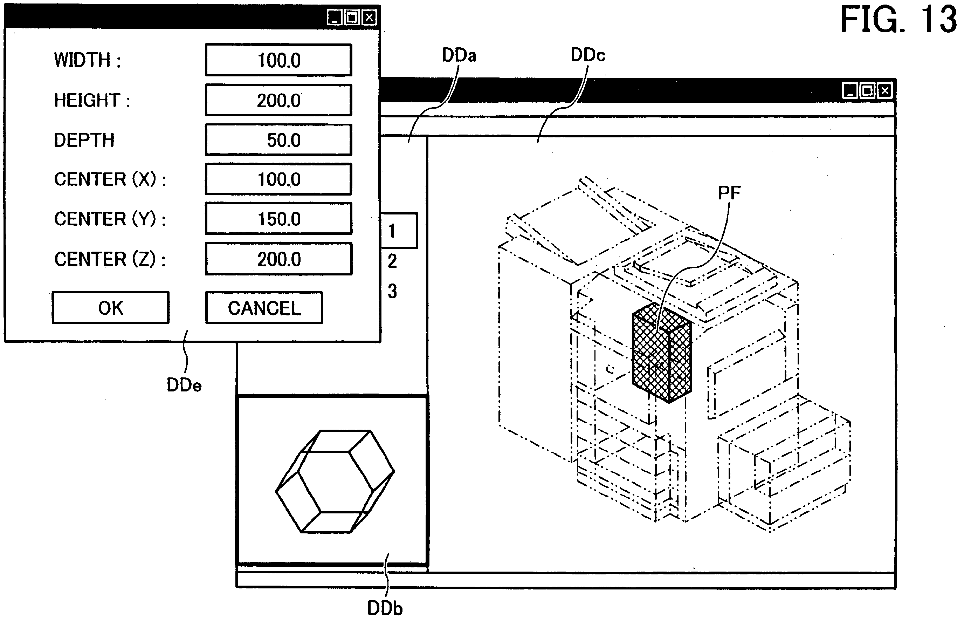

After the user chooses the image, the chosen image appears in the single part image field DDb as illustrated in FIG. 12. Next, the CRT screen display 11 may display a part position input window DDe illustrated in FIG. 13. When the user inputs the position of OPTION 1, a highlighted rectangle PF corresponding to the input position appears in the catalog display field DDc. The rectangle PF is a rendered 2D image of a rectangular solid.

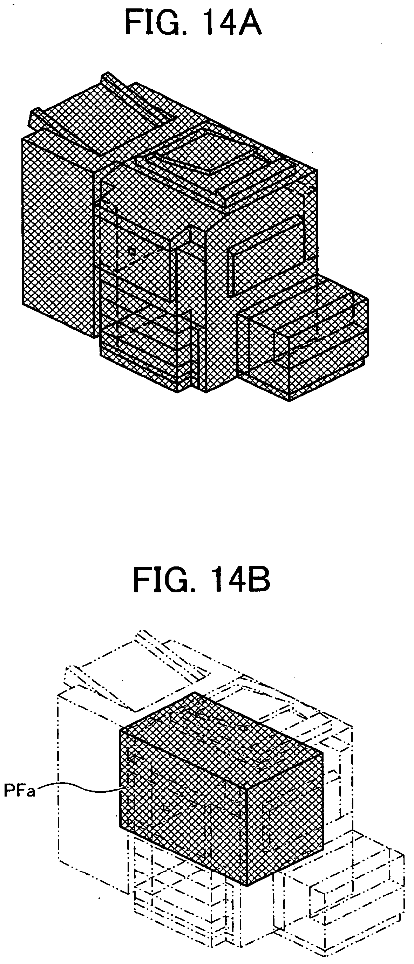

The procedure to input the position information is described with reference to FIGs. 14A to 14F. FIGs. 14A to 14F show that the assembly diagram in the catalog display field DDc changes according to the input by the user. FIG. 14A is an initial image in the catalog display field DDc and no rectangle indicating the location of OPTION 1 is shown therein because no position information is available.

When the user inputs the location and size as the position information of OPTION 1 in part position input window DDe, a highlighted rectangle PFa appears at a position corresponding to the input position information as illustrated in FIG. 14B. The rectangle PFa is a 2D image of a rectangular solid that is viewed from a predetermined viewpoint and has a size corresponding to the position information input by the user.

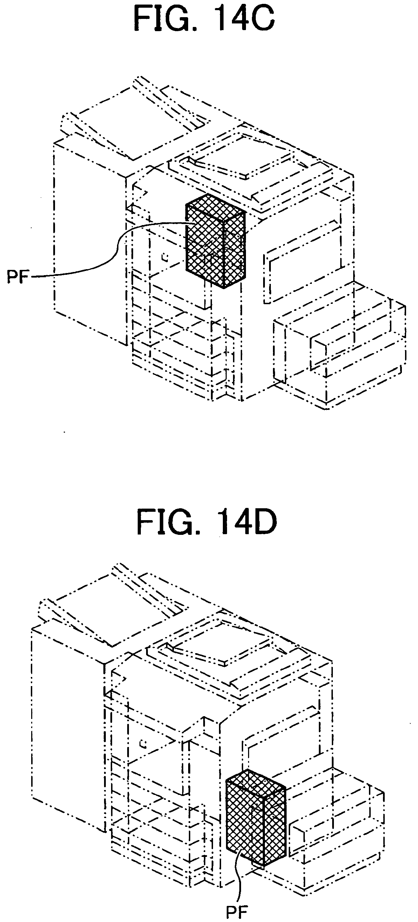

The user may change the size of the region. FIG. 14C includes the rectangle PF according to the changed size. The user may change the location as required. When the user changes the input of the position, the rectangle PF is shown at a different position as illustrated in FIG. 14D.

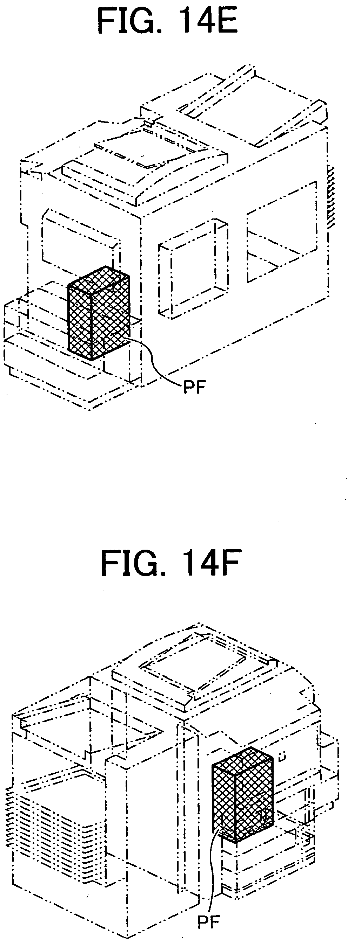

The user may change the viewpoint of the assembly diagram to check the location of OPTION 1. FIGs. 14E and 14F are assembly diagrams from different viewpoints.

As described above, four versions of assembly diagram with different viewpoints are generated. Therefore, the user generates rectangles indicating position information corresponding to each of the four versions.

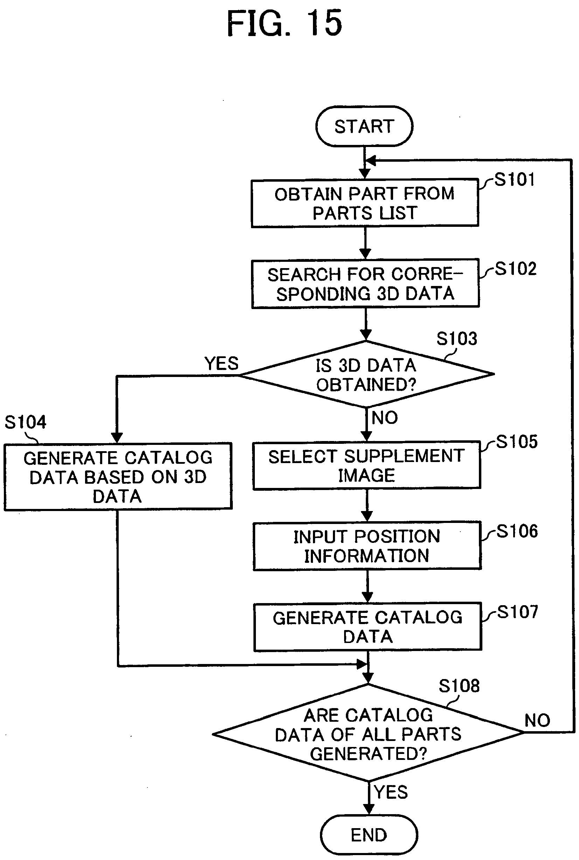

FIG. 15 is a flowchart of an example procedure performed by the catalog generator 20.

At S101, the catalog generator 20 obtains information of a part from the parts list in the parts list storage 22. The catalog generator 20 may search the 3D data storage 21 for 3D data corresponding to the part at S102, and may check whether or not the 3D data of the part is obtained at S103. When the 3D data is obtained (YES at S103), the catalog generator 20 may generate catalog data of the part based on the 3D data, and store the catalog data in the catalog storage 23 at S104.

To the contrary, when the 3D data is not obtained (NO at S103), the user may specify 2D data for the part stored in the image data storage 24 with the image compensator 25 at S105. The user may input of the part in a product or unit (position information) at S106. At S107, the catalog generator generates catalog data of the part based on the 2D data and the position information, and stores the catalog data in the catalog storage 23.

The catalog generator 20 may check whether or not the catalog data for all the parts on the parts list is generated at S108. When the answer at S108 is NO, the catalog generator 20 may go back to S101 and generate catalog data for a next part. When the answer at S108 is YES, the catalog generator 20 completes the procedure.

As described above, in an embodiment, the user may supplement an image taken by a digital still camera or an illustration image to generate a parts catalog of a product when 3D data of a component part listed on the parts list of the product is not available. The user may further input the location of the part in the product. Therefore, the user may generate catalog data to display a three-dimensional catalog.

Further, the catalog browser 27 basically displays the contents illustrated in FIG. 8. To obtain the information of a part, the user selects a unit including the target part from the parts list field DDa. An image of the selected unit is displayed in the single part image field DDb. Simultaneously, the selected unit is highlighted the assembly diagram of the unit displayed in the catalog display field DDc.

Further, the parts list field DDa may indicate names of parts included in the unit. The user may select the target part from the parts list field DDa. The location of the target part is highlighted in the catalog display field DDc and an image of target part is displayed in the single part image field DDb. Therefore, its part number may be indicated in the parts list field DDa to help the user to obtain its part number easily.

In an example procedure, the user basically inputs location and region of a rectangular solid as the compensated position information. Alternatively, the compensated position information may be constituted of a location and a region of an arbitrary three-dimensional solid, for example, a sphere or an ellipsoidal body.

In an example procedure, the catalog generator 20 may output catalog data for each part after obtaining its 3D data or after the user compensates an image and inputs position information of the part whose 3D data is not available. Alternatively, the catalog generator 20 may output catalog data immediately after the user compensates images and inputs position information of the compensated images for the parts whose 3D data is not available.

Further, in an embodiment, the user specifies an image file for an image in the image data storage 24. Alternatively, the data processor 100 may include a system to automatically select an image file from the image data storage 24 according to preliminary named file names, for example, by incorporating the part order names in the file names.

Further, the image compensator 25 may be configured to supplement an image taken by a digital still camera or an illustration image of a part whose 3D data is available. The user may choose the part whose data is the combination of 2D image data and the position information in the parts catalog displayed on the display, similarly to the part whose data is automatically generated based on the 3D data.

The 3D data may be generated with an arbitrary 3D CAD system.

Numerous additional modifications and variations are possible in light of the above teachings. It is therefore to be understood that within the scope of the appended claims, the disclosure of this patent specification may be practiced otherwise than as specifically described herein.

This patent application is based on and claims priority to Japanese patent application, No. JP2006-135220 filed on May 15, 2006 in the Japan Patent Office.

## Claims

1. A method of generating parts catalog data for a visual parts catalog showing parts of a product with a three-dimensional appearance, the method comprising:
receiving a list of parts to be included in a parts catalog;
for each part in the list, inputting data thereof wherein:
for at least one part, three dimensional data is input; and
for at least one other part for which three-dimensional data is not available, a data combination of two-dimensional image data and position information of the part in a three-dimensional model of the product, is input; **characterized in that** the position information is input by a user and includes position information indicating the location and size of the part for which three-dimensional data is not available.

2. A method of generating parts catalog data according to Claim 1, wherein the three-dimensional data is generated with a three-dimensional CAD system at a stage of product design.

3. A method of generating parts catalog data according to Claim 1 or 2, wherein the part is an exchangeable component part in the product.

4. A data generator to generate parts catalog data for a visual parts catalog showing parts of a product with a three-dimensional appearance, comprising:
a parts list storage (22) for storing a list of parts;
a data storage (21) for storing three-dimensional data of a plurality of parts;
a catalog generator configured to obtain data of each part of the list, wherein the catalog generator is configured to obtain three-dimensional data for the data stage (21) for at least one part and to obtain a data combination of two-dimensional image data and position information of the part in a three-dimensional model of the product, three dimensional data does not exist in the data storage, **characterized in that**:
the catalog generator is configured to receive position information input by a user, the position information including information indicating the location and size of the part for which three-dimensional data is not available.

5. A data generator to generate parts catalog data according to Claim 4, wherein the part is a exchangeable component part in the product.

6. A computer program comprising program code means that, when executed by a computer system, instructs the computer system to perform a method of generating parts catalog data for a visually three-dimensional parts catalog of a product according to any one of claims 1 to 3.

## Patentansprüche

1. Verfahren zum Erzeugen von Teilekatalogdaten für einen visuellen Teilekatalog, der Teile eines Produkts in einer dreidimensionalen Darstellung zeigt, wobei das Verfahren Folgendes umfasst:
Empfangen einer Liste von Teilen, die in einem Teilekatalog inbegriffen sein sollen;
Eingeben der Daten jedes Teils in der Liste, wobei:
für mindestens ein Teil dreidimensionale Daten eingegeben werden und
für mindestens ein anderes Teil, für das dreidimensionale Daten nicht verfügbar sind, eine Datenkombination aus zweidimensionalen Bilddaten und Positionsinformationen des Teils in einem dreidimensionalen Modell des Produkts eingegeben wird; **dadurch gekennzeichnet, dass** die Positionsinformationen durch einen Anwender eingegeben werden und Positionsinformationen umfassen, die den Ort und die Größe des Teils, für das dreidimensionale Daten nicht verfügbar sind, anzeigen.

2. Verfahren zum Erzeugen von Teilekatalogdaten nach Anspruch 1, wobei die dreidimensionalen Daten mit einem dreidimensionalen CAD-System in einer Stufe des Produktentwurfs erzeugt werden.

3. Verfahren zum Erzeugen von Teilekatalogdaten nach Anspruch 1 oder 2, wobei das Teil ein austauschbares Komponententeil in dem Produkt ist.

4. Datengenerator, um Teilekatalogdaten für einen visuellen Teilekatalog zu erzeugen, der Teile eines Produkts in einer dreidimensionalen Darstellung zeigt, der Folgendes umfasst:
einen Teilelistenspeicher (22) zum Speichern einer Liste von Teilen;
einen Datenspeicher (21) zum Speichern von dreidimensionalen Daten von mehreren Teilen;
einen Katalogenerator, der konfiguriert ist, Daten für jedes Teil der Liste zu erhalten, wobei der Kataloggenerator konfiguriert ist, dreidimensionale Daten für den Datenspeicher (21) für mindestens ein Teil zu erhalten und eine Datenkombination aus zweidimensionalen Bilddaten und Positionsinformationen des Teils in einem dreidimensionalen Modell des Produkts zu erhalten, wobei in dem Datenspeicher keine dreidimensionalen Daten vorhanden sind, **dadurch gekennzeichnet, dass**:
der Kataloggenerator konfiguriert ist, eine Positionsinformationeneingabe von einem Anwender zu empfangen, wobei die Positionsinformationen Informationen umfassen, die den Ort und die Größe des Teils angeben, für das dreidimensionale Daten nicht verfügbar sind.

5. Datengenerator, um Teilekatalogdaten zu erzeugen, nach Anspruch 4, wobei das Teil ein austauschbares Komponententeil in dem Produkt ist.

6. Computerprogramm, dass Programmcodemittel umfasst, die dann, wenn sie durch ein Computersystem ausgeführt werden, das Computersystem anweisen, ein Verfahren zum Erzeugen von Teilekatalogdaten für einen visuellen dreidimensionalen Teilekatalog eines Produkts nach einem der Ansprüche 1 bis 3 auszuführen.

## Revendications

1. Procédé de génération de données de catalogue de pièces pour un catalogue de pièces visuelles présentant des pièces d'un produit avec une apparence tridimensionnelle, le procédé comprenant les étapes ci-dessous consistant à :
recevoir une liste de pièces à inclure dans un catalogue de pièces ;
pour chaque pièce de la liste, saisir des données connexes, dans lequel :
pour au moins une pièce, des données tridimensionnelles sont saisies ; et
pour au moins une autre pièce pour laquelle des données tridimensionnelles ne sont pas disponibles, est saisie une combinaison de données des données d'images bidimensionnelles et d'informations de position de la pièce dans un modèle tridimensionnel du produit ; **caractérisé en ce que** les informations de position sont saisies par un utilisateur et incluent des informations de position indiquant l'emplacement et la taille de la pièce pour laquelle les données tridimensionnelles ne sont pas disponibles.

2. Procédé de génération de données de catalogue de pièces selon la revendication 1, dans lequel les données tridimensionnelles sont générées au moyen d'un système de conception assistée par ordinateur, CAO, tridimensionnelle, au cours d'une phase de conception de produit.

3. Procédé de génération de données de catalogue de pièces selon la revendication 1 ou 2, dans lequel la pièce est une pièce de composant interchangeable dans le produit.

4. Générateur de données destiné à générer des données de catalogue de pièces d'un catalogue de pièces visuelles présentant des pièces d'un produit avec une apparence tridimensionnelle, comprenant :
un magasin de stockage de liste de pièces (22) destiné à stocker une liste de pièces ;
un magasin de stockage de données (21) destiné à stocker des données tridimensionnelles d'une pluralité de pièces ;
un générateur de catalogue configuré de manière à obtenir des données de chaque pièce de la liste, dans lequel le générateur de catalogue est configuré de manière à obtenir des données tridimensionnelles pour le magasin de stockage de données (21), pour au moins une pièce, et à obtenir une combinaison de données des données d'images bidimensionnelles et d'informations de position de la pièce dans un modèle tridimensionnel du produit, lorsque des données tridimensionnelles n'existent pas dans le magasin de stockage de données, **caractérisé en ce que** :
le générateur de catalogue est configuré de manière à recevoir des informations de position saisies par un utilisateur, les informations de position incluant des informations indiquant l'emplacement et la taille de la pièce pour laquelle des données tridimensionnelles ne sont pas disponibles.

5. Générateur de données destiné à générer des données de catalogue de pièces selon la revendication 4, dans lequel la pièce est une pièce de composant interchangeable dans le produit.

6. Programme informatique comprenant un moyen de code de programme qui, lorsqu'il est exécuté par un système informatique, ordonne au système informatique de mettre en oeuvre un procédé de génération de données de catalogue de pièces pour un catalogue de pièces visuelles tridimensionnelles d'un produit selon l'une quelconque des revendications 1 à 3.
